# EUROPEAN PATENT APPLICATION

(11) **EP 2 190 136 A1**
(43) Date of publication of application: **26.05.2010**
(21) Application number: 08405291.9
(22) Date of filing: 25.11.2008
(51) Int. Cl.: H04H 60/35, H04H 60/91, H04H 60/29

(54) **Method for monitoring the viewing of video content**

(71) Applicant: GfK Telecontrol AG, 6052 Hergiswil (CH)
(72) Inventor: Battiston, Daniel, 3422 Kirchberg (CH); Clément, Christian, 1732 Arconciel (CH)
(74) Representative: AMMANN PATENTANWÄLTE AG BERN

(57) **Abstract**

A method for monitoring the viewing of video content transmitted via a first wireless link (70) to a mobile terminal (200), in particular to a mobile telecommunication device, comprises the steps of: within the mobile terminal (200) automatically gathering information relating to the viewing of the video content; forwarding the gathered information to an interface (210) of the mobile terminal (200), the interface (210) allowing for sending data via a second wireless link (50); and transmitting the information to a data collection center (60) via the second wireless link (50). Therefore, the information is directly gathered within the mobile terminal (200), i. e. the integrity of the gathered data is not affected by the video display and audio playback means used. The transmission of the gathered information by means of a wireless link (50) allows for an instant (or short-term) analysis of the data at the data collection center. The monitored user (and therefore its viewing habits) are completely unaffected by the inventive monitoring method.

## Description

### Technical Field

The invention relates to a method for monitoring the viewing of video content transmitted via a first wireless link to a mobile terminal, in particular to a mobile telecommunication device. Furthermore, the invention relates to a computer program product for carrying out the method as well as to a mobile terminal, in particular a mobile telecommunication device, allowing for monitoring the viewing of video content.

### Background Art

Audience measurement is used inter alia for assessing the share of audience of radio or TV programmes. Television ratings and metering information are typically generated by collecting viewing records from a sample of statistically selected households. In the context of known systems, each of the selected households has one or several data logging and processing units. The obtained data is sent to a data collection center where the information from the given sample is statistically processed.

Stationary devices are not feasible for the audience measurement of media that is consumed by way of portable devices such as portable radio and television receivers, and in particular mobile telecommunication devices (such as the so-called smartphones). Therefore, besides employing stationary units it is known to use portable units such as the "Mediawatch" provided by Telecontrol AG, Bern, Switzerland and Liechti AG, Kriegstetten, Switzerland, cf. e. g. EP 1 661 074 B1 (Liechti AG). This product has the apperance (and functionality) of a wristwatch and features an integral microphone. Thereby, the sound of radio and TV programmes the wearer is listening to at home, at work or on the move is registered. The samples registered are then coded in the watch and stored in heavily compressed form. This makes reconstruction impossible. At the same time, the stations to be measured are recorded at a data collection center assigned to the relevant TV and radio market. Alongside radio and TV measurement, the watch can also be used to measure print media or billboards: via a display, the watch wearer can save data on newspapers and magazines read in the watch and, via an RF signal, the watch recognizes when its wearer has gone past a poster.

This solution requires that the watches are distributed to the monitored listeners/viewers as well as collected after a given time interval. Furthermore, in order to obtain reliable statistics it is required that the device is worn at all times when monitored media is consumed. Finally, in the context of mobile terminals it is common to use headphones when listening to radio or viewing TV programmes. This may interfere with the recording of audio samples.

### Summary of the invention

It is the object of the invention to create a method pertaining to the technical field initially mentioned, that is suitable for the monitoring of viewing content displayed on a mobile terminal, in particular a mobile telecommunication device, and that provides reliable data.

The solution of the invention is specified by the features of claim 1. According to the invention the method comprises the following steps:
a) within the terminal automatically gathering information relating to the viewing of the video content;
b) forwarding the gathered information to an interface of the mobile terminal, the interface allowing for sending data via a second wireless link;
c) transmitting the information to a data collection center via the second wireless link.

The information is directly gathered within the mobile terminal, i. e. the integrity of the gathered data is not affected by the video display and audio playback means used; the method does not have to rely on sound transmitted to a microphone. The transmission of the gathered information by means of a wireless link allows for an instant (or short-term) analysis of the data at the data collection center. The monitored user (and therefore its viewing habits) are completely unaffected by the inventive monitoring method.

A mobile terminal, in particular a mobile telecommunication device, which may be used in the context of the invention comprises
a) an interface for receiving video content transmitted over a first wireless link;
b) a viewer application for displaying the video content on a display of the mobile terminal;
c) a communication application for sending data via a second wireless link;
d) a data gathering application for gathering information relating to the viewing of the video content;
whereas the data gathering application forwards the gathered information to the communication application for transmitting the information to a data collection center via the second wireless link.

The method may be carried out by the execution of a computer program product on the mobile terminal.

The gathered information in particular relates to at least one of the following:
a) an active channel;
b) program content;
c) a visibility of the video content on a display;
d) a volume level of sound related to the video content.

In order to be able to assess television ratings it is crucial to know at what times the user is watching a given programme, i.e. at what times a given channel (such as television channel or web TV stream) is active. Often, in connection with digital TV networks or video streaming services the displayed content is identified (e. g. by a film title etc.). This information may also be used for generating ratings. Furthermore, the visibility of the video content on a display (full-screen view, reduced-size view, thumbnail view, blanked) is relevant as well, as it is an indicator for whether the programme is indeed viewed by the user. Similarly, the volume level of sound (including "mute" state) is another indicator for the present attention of the user to the presently received or streamed programme.

In the context of monitoring streamed content, it is preferred that the gathered information comprises an indication about whether the viewed content is broadcasted live or whether it is time-shifted. Furthermore, the information may include data obtained from an electronic program guide (EPG) or electronic service guide (ESG) or other textual information sources (such as teletext) as well as data relating to the access of the user to the EPG/ESG or teletext, respectively (access time, access duration, viewed information etc.). In case of devices allowing for dual-channel viewing (e. g. by means of picture-in-picture display) it is possible to simultaneously gather information about all the viewed programs and preferably also about the priority of the viewed programs (such as the size of the different pictures or main screen / thumbnail screen, respectively).

Furthermore, some devices allow the recording of content directly on a storage of the device or physically connected to the device. In this case, it is advantageous to monitor the display of the recorded content as well and to process the corresponding information analogously to the information relating to the content transmitted via the first wireless link and directly displayed on the mobile terminal. Preferably, not only the display of recorded content is monitored but also the user actions relating to such content (recordal, deletion, forwarding to other users or onto other media etc.).

In particular, the first wireless link may be a digital video broadcast link such as DVB-T (terrestrial broadcasting in VHF or UHF bands) or DVB-H (terrestrial asynchronous transmission to mobile terminals). Further possible standards for the first wireless link are e.g. ATSC-M/H, ISDB-T, T-DMB etc.

Alternatively, the first wireless link may be a mobile telecommunication link (such as UMTS, EDGE, GPRS etc.), whereas the video content is streamed to the terminal. This allows for broadcasting television content by specialized service providers as well as from usual web sites (web TV).

In a further alternative, the first wireless link is a WLAN link, as many modern mobile telecommunication devices comprise a WLAN interface.

In a first advantageous embodiment of the invention the information relating to the viewing of the video content is gathered by a viewer application of the mobile terminal. The viewer application is therefore capable of outputting information relating to the video content displayed by the viewer application. This information is forwarded to the data gathering application. In order to adapt a mobile terminal for monitoring the viewed video content the standard viewer application may be modified, e.g. by inserting corresponding subroutines. Alternatively, the application may be replaced by another viewer application including the required functionality.

In a second advantageous embodiment of the invention the information relating to the viewing of the video content is gathered by monitoring a functioning of a viewer application of the mobile terminal. There is an additional monitoring application provided which analyzes the input and/or output data of the viewer application in order to reconstruct the required information (see above).

In a third advantageous embodiment of the invention the information relating to the viewing of the video content is gathered by monitoring a content of a data stream or data packets received via the first wireless link. In the case of on-demand data (as streamed video content) analysis of the data received by the mobile terminal already reveals most or all of the required information, therefore a corresponding application (so-called sniffing application) may directly access the received data packets (or a received data stream) in order to extract the needed data. Access to the viewer application is not necessary.

It is to be understood that the three approaches mentioned above may be combined within a single unit. For example, a modified viewer application or a monitoring application may be used for gathering information about content received via DVB whereas data packets may be inspected for gathering information about streamed video content.

In particular, the second wireless link is a mobile telecommunication link (such as UMTS, EDGE, GPRS etc.). Usual mobile telecommunication devices are capable of connecting to other devices by means of such a link. In particular it may be possible that the first and second link are identical, i. e. that the video content is received via a mobile telecommunication link by streaming data and that the gathered information is transmitted to the data collection center by means of the same network.

Alternatively, the second wireless link may e. g. by a WLAN link, as many modern mobile telecommunication devices comprise a WLAN interface.

Preferably, the method comprises the further step of prompting a user of the mobile terminal to provide additional information to be forwarded together with the gathered information relating to the viewing of the video content. Prompting is effected by an announce application. After having received the user's information, it is forwarded together with the gathered information relating to the viewing of the video content to the data gathering application.

Prompting may be triggered each time it is detected that the viewer application is activated or the programme or content is changed. The additional information may e. g. relate to the person(s) that are presently viewing or to the (subjective) quality of the viewed content as rated by the user.

Other advantageous embodiments and combinations of features come out from the detailed description below and the totality of the claims.

### Brief description of the drawings

The drawings used to explain the embodiments show:
- Fig. 1: A schematic representation of a first embodiment of an inventive mobile telecommunication device interacting with a data collection center;
- Fig. 2: a schematic representation of a second embodiment of an inventive mobile telecommunication device interacting with a data collection center; and
- Fig. 3: a schematic representation of a third embodiment of an inventive mobile telecommunication device.

In the figures, the same components are given the same reference symbols.

### Preferred embodiments

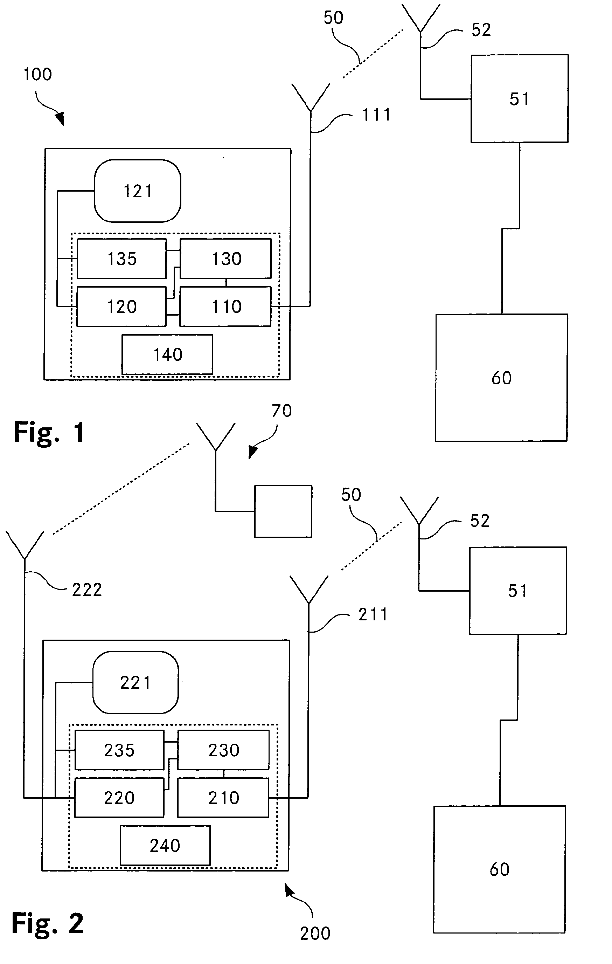

The Figure 1 shows a schematic representation of a first embodiment of an inventive mobile telecommunication device interacting with a data collection center. The mobile communication device 100 is a cellular phone that may connect by a wireless link 50 to a mobile telecommunications network for data and voice connections (such as a 3G mobile telecommunications network). In Figure 1, the mobile telecommunications network is schematically represented by a base station 51 with antenna 52. The mobile communication device 100 comprises a receiving and sending antenna 111 connected to a communication module 110 (comprising inter alia a sender/receiver and a communication interface as well as a communication application for controlling the sender/receiver and the interface). Furthermore, the communication device 100 comprises a viewer module 120 (comprising inter alia a video decoder and a display controller as well as a viewer application for controlling the video decoder and the display controller). The viewer module 120 receives data from the communication module 110, transforms relevant parts of that data to a video signal which is used for driving a display 121.

In the first embodiment of the invention, the viewer module 120 is capable of sending all information about the current active channel, the state of reception (image received or not) and the visibility of the application (full screen, partial screen, partially hidden, blanked) to a collector module 130 (comprising inter alia a collector application). The data collected by module 130 is regularly sent (in raw or consolidated form) to a collection center 60 via communication module 110, the wireless link 50 and the mobile telecommunications network.

Furthermore, the collector module 130 interacts with an announce module 135. Each time the collector module 130 is informed that the viewer module 120 is activated the announce module 135 prompts via display 121 the user for additional information, in particular about the identity of the person(s) that are presently watching. After receipt, the prompted information is forwarded to the collector module 130 for direct or later transmittal to the collection center 60.

The interaction between the mentioned modules as well as further modules (that are not displayed in the present context), the storing and transmission of data etc. is controlled in a manner known as such by the central controller module 140 running the device's operating system.

The described modules may be realized by separate components of the mobile communication device 100 or they may be realized purely by corresponding software modules.

The Figure 2 shows a schematic representation of a second embodiment of an inventive mobile telecommunication device interacting with a data collection center.

Again, the mobile communication device 200 is a cellular phone that may connect by a wireless link 50 to a mobile telecommunications network for data and voice connections (such as a 3G mobile telecommunications network). In Figure 2, the mobile telecommunications network is schematically represented by a base station 51 with antenna 52. The mobile communication device 200 comprises a receiving and sending antenna 211 connected to a communication module 210 (comprising inter alia a sender/receiver and a communication interface as well as a communication application for controlling the sender/receiver and the interface). Furthermore, the communication device 100 comprises a viewer module 220 comprising this time a receiver for a digital broadcast system 70 (e. g. DVB-H or DVB-T) besides a video decoder and a display controller as well as a viewer application for controlling the receiver, the video decoder and the display controller. The viewer module 220 receives a signal from an antenna 222. The signal is received, decoded and transformed into a video signal which is used for driving a display 221.

In the second embodiment of the invention, the mobile communication device 200 comprises a monitoring module 230 which monitors the viewer module 220 and all the drivers and services used for and by the viewer module 220 in order to obtain information about the current active channel, the state of reception (image received or not) and the visibility of the application (full screen, partial screen, partially hidden, blanked). The information is collected by the monitoring module 230 and regularly sent (in raw or consolidated form) to the collection center 60 via communication module 210, the wireless link 50 and the mobile telecommunications network.

Furthermore, the monitoring module 230 interacts with an announce module 235. Each time the monitoring module 230 detects that the viewer module 220 is activated the announce module 235 prompts via display 221 the user for additional information, in particular about the identity of the person(s) that are presently watching. After receipt, the prompted information is forwarded to the monitoring module 230 for direct or later transmittal to the collection center 60.

Again, the interaction between the mentioned modules as well as further modules (that are not displayed in the present context), the storing and transmission of data etc. is controlled in a manner known as such by the central controller module 240 running the device's operating system.

The described modules may be realized by separate components of the mobile communication device 200 or they may be realized purely by corresponding software modules.

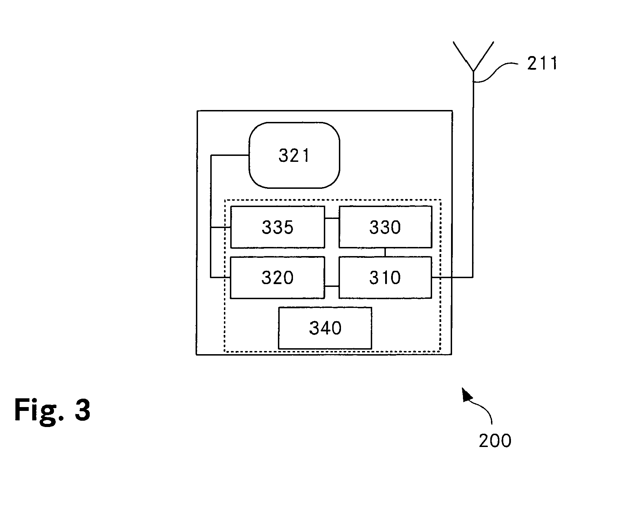

The Figure 3 is a schematic representation of a third embodiment of an inventive mobile telecommunication device. In many aspects it corresponds to the mobile telecommunication device 100 described above, in connection with Figure 1. In particular, the video content is received over the mobile telecommunications network.

Again, the mobile communication device 300 comprises a receiving and sending antenna 31 connected to a communication module 310 (comprising inter alia a sender/receiver and a communication interface as well as a communication application for controlling the sender/receiver and the interface). Furthermore, the communication device 300 comprises a viewer module 320 (comprising inter alia a video decoder and a display controller as well as a viewer application for controlling the video decoder and the display controller). The viewer module 320 receives data from the communication module 310, transforms relevant parts of that data to a video signal which is used for driving a display 321.

In the third embodiment of the invention, a sniffing module 330 inspects all data packets received by the communication module 310 in order to obtain information about the current active channel, the state of reception (image received or not) and the visibility of the application (full screen, partial screen, partially hidden, blanked). This information is collected by the sniffing module 330 and regularly sent (in raw or consolidated form) to a collection center via communication module 310 and the mobile telecommunications network.

Furthermore, the sniffing module 330 again interacts with an announce module 335. Each time the sniffing module 330 detects that the display of video content has started the announce module 335 prompts via display 321 the user for additional information, in particular about the identity of the person(s) that are presently watching. After receipt, the prompted information is forwarded to the sniffing module 330 for direct or later transmittal to the collection center.

Again, the interaction between the mentioned modules as well as further modules (that are not displayed in the present context), the storing and transmission of data etc. is controlled in a manner known as such by the central controller module 340 running the device's operating system. The described modules may be realized by separate components of the mobile communication device 300 or they may be realized purely by corresponding software modules.

In the collection center the data is processed in a manner known as such. The center receives data from portable terminals of statistically selected users and analyzes it to assess the viewing behaviours of users in a geographic area, market, social or age group of interest. Additionally, the collection center may generate metering statistics and other parameters indicative of viewing behaviour associated with some or all of the participating users. To generate viewing behaviour information from viewing records, the central office or data processing facility may compare reference data, such as a list of programs (e.g., a schedule of television programming or a television guide), to the received data. In this manner, the collection center can infer which program was displayed by cross-referencing the time and channel information in a viewing record to the program associated with that same time and channel in the program schedule. Such a cross-referencing process can be carried out for each of the viewing records received by the central office, thereby enabling the central office to reconstruct which programs were displayed on the monitored mobile terminals. Of course, the aforementioned cross-referencing process is unnecessary in systems in which the identity of the program may be directly obtained on the mobile terminal.

It is to be noted that the invention is not restricted to the embodiments described above. In particular, the invention has been described by reference to "modules" or "applications". As it is known to the skilled person, computer platforms as well as software environments that are common in the context of mobile terminals (such as e. g. smartphones) allow for a variety of different distributions of tasks or functionalities to hardware and software components, i. e. usually it is possible to have two different functions being performed by two different hardware components (such as semiconductor chips), by a single hardware component running two independent applications simultaneously (or subsequently) or even by a single hardware component running a single application providing both functions. Therefore, the terms "module" and "application" are to be understood in a functional sense, not limiting the choice of the actual implementation by hard- and software.

Furthermore, it is to be noted that the monitoring of the viewer application as described in connection with Figure 2 may as well be applied when monitoring the viewing of streamed video content, whereas a viewer application providing data by itself may as well be applied when monitoring the viewing of video content received from a digital video broadcast system.

In summary, it is to be noted that the invention creates a method that is suitable for the monitoring of viewing content displayed on a mobile terminal, in particular a mobile telecommunication device, and that provides reliable data.

## Claims

1. A method for monitoring the viewing of video content transmitted via a first wireless link (50; 70) to a mobile terminal (100; 200; 300), in particular to a mobile telecommunication device, comprising the steps of:
a) within the mobile terminal (100; 200; 300) automatically gathering information relating to the viewing of the video content;
b) forwarding the gathered information to an interface (110; 210; 310) of the mobile terminal (100; 200; 300), the interface (110; 210; 310) allowing for sending data via a second wireless link (50);
c) transmitting the information to a data collection center (60) via the second wireless link (50).

2. The method as recited in claim 1, **characterized in that** the gathered information relates to at least one of the following:
a) an active channel;
b) program content;
c) a visibility of the video content on a display;
d) a volume level of sound related to the video content.

3. The method as recited in claim 1 or 2, **characterized in that** the first wireless link (70) is a digital video broadcast (DVB) link.

4. The method as recited in claim 1 or 2, **characterized in that** the first wireless link (50) is a mobile telecommunication link and **in that** the video content is streamed to the terminal (100; 300).

5. The method as recited in one of claims 1 to 4, **characterized in that** the information relating to the viewing of the video content is gathered by a viewer application (120) of the mobile terminal (100), the viewer application (120) being capable of outputting information relating to the video content displayed by the viewer application (120).

6. The method as recited in one of claims 1 to 4, **characterized in that** the information relating to the viewing of the video content is gathered by monitoring a functioning of a viewer application (220) of the mobile terminal (200).

7. The method as recited in claim 4, **characterized in that** the information relating to the viewing of the video content is gathered by monitoring a content of a data stream or data packets received via the first wireless link (50).

8. The method as recited in one of claims 1 to 7, **characterized in that** the second wireless link (50) is a mobile telecommunication link.

9. The method as recited in one of claims 1 to 8, comprising the further step of prompting a user of the mobile terminal (100; 200; 300) to provide additional information to be forwarded together with the gathered information relating to the viewing of the video content.

10. A mobile terminal (100; 200; 300), in particular a mobile telecommunication device, comprising
a) an interface (110; 220; 310) for receiving video content transmitted over a first wireless link (50; 70);
b) a viewer application for displaying the video content on a display (121; 221; 321) of the mobile terminal (100; 200; 300);
c) a communication application (110; 210; 310) for sending data via a second wireless link (50);
d) a data gathering application (130; 230; 330) for automatically gathering information relating to the viewing of the video content;
whereas the data gathering application (130; 230; 330) forwards the gathered information to the communication application (110; 210; 310) for transmitting the information to a data collection center (60) via the second wireless link (50).

11. The mobile terminal as recited in claim 10, **characterized in that** the viewer application (120) is capable of outputting information relating to the video content displayed by the viewer application (120) to the data gathering application (130).

12. The mobile terminal as recited in claim 10, **characterized by** a monitoring application (230) for monitoring a functioning of the viewer application (220) in order to generate information relating to the viewing of the video content.

13. The mobile terminal as recited in claim 10, **characterized by** a sniffing application (330) for monitoring a content of a data stream or data packets received via the first wireless link (50), the data representing the video content, in order to generate information relating to the viewing of the video content.

14. The mobile terminal as recited in one of claims 10 to 13, **characterized by** an announce application (135; 235; 335) for prompting a user of the mobile terminal (100; 200; 300) to provide additional information to be forwarded together with the gathered information relating to the viewing of the video content.

15. A computer program product, that when executed on a mobile terminal device (100; 200; 300) causes the mobile terminal device (100; 200; 300) to carry out the method as recited in one of claims 10 to 14.
